# EUROPEAN PATENT APPLICATION

(11) **EP 2 461 006 A1**
(43) Date of publication of application: **06.06.2012**
(21) Application number: 10853385.2
(22) Date of filing: 13.10.2010
(51) Int. Cl.: F02D 23/00

(54) **DEVICE FOR CONTROLLING INTERNAL COMBUSTION ENGINE**

(71) Applicant: Toyota Jidosha Kabushiki Kaisha, Aichi 471-8571 (JP)
(72) Inventor: OTSUKA, Takayuki, Aichi 4718571 (JP)
(74) Representative: Kopp, Stephan
(86) International application number: PCT/JP2010/067967
(87) International publication number: WO 2012/049744

(57) **Abstract**

To provide a control apparatus for an internal combustion engine that, in a turbocharged internal combustion engine including a waste gate valve, can favorably prevent an exhaust system part disposed downstream of a turbine from overheating, regardless of opening of the waste gate valve.

The control apparatus includes a turbocharger (20) having a turbine (20b) which is operative by exhaust energy and is disposed in an exhaust passage (14). The control apparatus further includes a WGV (32) for opening or closing an exhaust bypass passage (30) that bypasses the turbine (20b). Timing to start fuel quantity increase control for preventing an exhaust system part, such as a catalyst (34), from overheating is advanced when the WGV (32) is in an open state than when the WGV (32) is in a closed state.

## Description

### Technical Field

The present invention relates to control apparatuses for internal combustion engines. More particularly, the present invention relates to a control apparatus for an internal combustion engine suitable for controlling an internal combustion engine with a turbocharger including a waste gate valve.

### Background Art

For example, a known control apparatus for an internal combustion engine is disclosed in patent document 1 in which air-fuel-ratio control for prevention of exhaust overheating is performed. Specifically, this known control apparatus estimates exhaust gas temperature based on a fuel supply quantity or an intake air pressure that is variable according to an operating state of the internal combustion engine. When load on the internal combustion engine increases to exceed a predetermined value, a correction to increase the fuel supply quantity is performed after an estimated exhaust gas temperature reaches a predetermined temperature.
Including the above described document, the applicant is aware of the following documents as a related art of the present invention.

### Citation List

### Patent Documents

Patent Document 1: Japanese Laid-open Patent Application Publication No. Hei 7-180591
Patent Document 2: Japanese Laid-open Patent Application Publication No. 2010-133259
Patent Document 3: Japanese Laid-open Patent Application Publication No. 2003-65111

### Summary of Invention

### Technical Problem

In a turbocharged internal combustion engine having a waste gate valve that opens or closes an exhaust bypass passage that bypasses a turbine, an exhaust gas passes through different passages depending on whether the waste gate valve is in an open state or a closed state. As a result, time during which the exhaust gas reaches an exhaust system part, such as a catalyst, disposed downstream of the turbine varies depending on the open or closed state of the waste gate valve.

The turbine takes thermal energy from the exhaust gas as the exhaust gas passes therethrough. This creates a difference in heat quantity between the exhaust gas passing through the turbine and the exhaust gas passing through the exhaust bypass passage when the exhaust gases reach the abovementioned exhaust system part disposed downstream of the turbine.

If the above-described related art is applied to the abovementioned turbocharged internal combustion engine, resultantly no consideration is given to an effect of a change in opening of the waste gate valve (including a case in which the closed state or the open state is alternatively selected) on temperature of the exhaust system part. Consequently, with the related art that uses the estimated exhaust temperature obtained through calculation, there may be cases in which actual temperatures of the exhaust system part cannot be accurately identified. As a result, a fuel quantity may not be increased at appropriate timing. If timing to increase the fuel quantity is delayed, therefore, the exhaust system part may be overheated.

The present invention has been made to solve the foregoing problem and it is an object of the present invention to provide a control apparatus for an internal combustion engine that, in a turbocharged internal combustion engine including a waste gate valve, can favorably prevent, regardless of opening of the waste gate valve, an exhaust system part disposed downstream of a turbine from overheating.

### Solution to Problem

A first aspect of the present invention is a control apparatus for an internal combustion engine, comprising:
a turbocharger including a turbine disposed in an exhaust passage, the turbine being operative by exhaust energy;
an exhaust bypass passage branching off from the exhaust passage at an upstream portion side of the turbine and merging with the exhaust passage at a downstream portion side of the turbine;
a waste gate valve for opening or closing the exhaust bypass passage;
WGV opening acquiring means for acquiring opening of the waste gate valve;
an exhaust system part disposed further downstream of the downstream portion;
overheat determining means for determining whether the exhaust system part is in an overheated condition based on a parameter indicative of an operating state of the internal combustion engine or an estimated value based on the parameter;
overheat prevention control performing means for performing overheat prevention control that prevents the exhaust system part from overheating, when a determination made by the overheat determining means holds; and
overheat prevention control changing means for changing a control amount or a reference value which is relating to performance of the overheat prevention control, according to the opening of the waste gate valve.

A second aspect of the present invention is the control apparatus for an internal combustion engine according to the first aspect of the present invention,
wherein the overheat prevention control changing means is overheat prevention control timing changing means for changing timing to perform the overheat prevention control according to the opening of the waste gate valve.

A third aspect of the present invention is the control apparatus for an internal combustion engine according to the first or second aspect of the present invention,
wherein the overheat prevention control is fuel quantity increase control for increasing an amount of fuel injected into the internal combustion engine.

A fourth aspect of the present invention is the control apparatus for an internal combustion engine according to the second or third aspect of the present invention,
wherein the overheat prevention control timing changing means includes start timing changing means for advancing timing to start the overheat prevention control when the opening of the waste gate valve is large relative to timing in a case where the opening of the waste gate valve is small.

A fifth aspect of the present invention is the control apparatus for an internal combustion engine according to any one of the second to fourth aspects of the present invention,
wherein the overheat prevention control is fuel quantity increase control for increasing an amount of fuel injected into the internal combustion engine, and
wherein the overheat prevention control timing changing means includes termination timing changing means for advancing timing to terminate the fuel quantity increase control when the opening of the waste gate valve is large relative to timing in a case where the opening of the waste gate valve is small.

A sixth aspect of the present invention is the control apparatus for an internal combustion engine according to any one of the second to fifth aspects of the present invention,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the overheat prevention control timing changing means includes estimated temperature changing means for changing, according to the opening of the waste gate valve, the estimated temperature of the exhaust system part calculated by the exhaust system temperature estimating means.

A seventh aspect of the present invention is the control apparatus for an internal combustion engine according to the fourth aspect of the present invention,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the start timing changing means is determining value changing means for reducing the overheat determining value when the opening of the waste gate valve is large as compared with the overheat determining value when the opening of the waste gate valve is small.

A eighth aspect of the present invention is the control apparatus for an internal combustion engine according to the fourth aspect of the present invention,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the start timing changing means includes thermal time constant changing means for making small a thermal time constant used for calculating the estimated temperature of the exhaust system part in the exhaust system temperature estimating means when the opening of the waste gate valve is large as compared with the thermal time constant when the opening of the waste gate valve is small.

A ninth aspect of the present invention is the control apparatus for an internal combustion engine according to the fifth aspect of the present invention, further comprising:
exhaust system temperature estimating means for calculating an estimated temperature of the exhaust system part,
wherein the overheat prevention control performing means includes termination timing setting means for terminating the fuel quantity increase control, when the estimated temperature of the exhaust system part is lower than a termination timing determining value during performance of the fuel quantity increase control, and
wherein the termination timing changing means is determining value changing means for increasing the termination timing determining value when the opening of the waste gate valve is large as compared with the termination timing determining value when the opening of the waste gate valve is small.

A tenth aspect of the present invention is the control apparatus for an internal combustion engine according to the fifth aspect of the present invention, further comprising:
exhaust system temperature estimating means for calculating an estimated temperature of the exhaust system part,
wherein the overheat prevention control performing means includes termination timing setting means for terminating the fuel quantity increase control, when the estimated temperature of the exhaust system part is lower than a termination timing determining value during performance of the fuel quantity increase control, and
wherein the termination timing changing means includes thermal time constant changing means for making small a thermal time constant used for calculating the estimated temperature of the exhaust system part in the exhaust system temperature estimating means when the opening of the waste gate valve is large as compared with the thermal time constant when the opening of the waste gate valve is small.

### Advantageous Effects of Invention

According to the first aspect of the present invention, the control amount or the reference value relating to performance of the overheat prevention control is changed according to the opening of the waste gate valve, so that the overheat prevention control that takes into consideration changes in the opening of the waste gate valve can be performed. The present invention therefore favorably prevents the exhaust system part disposed downstream of the turbine from overheating regardless of the opening of the waste gate valve.

According to the second aspect of the present invention, the timing to perform the overheat prevention control is changed according to the opening of the waste gate valve, so that the overheat prevention control that takes into consideration changes in the opening of the waste gate valve can be performed. The present invention therefore favorably prevents the exhaust system part disposed downstream of the turbine from overheating regardless of the opening of the waste gate valve.

According to the third aspect of the present invention, when the fuel quantity increase control is performed as the overheat prevention control, the exhaust system part disposed downstream of the turbine can be favorably prevented from overheating, regardless of the opening of the waste gate valve.

According to the fourth aspect of the present invention, when the opening of the waste gate valve is large, which serves as a condition in which a transient change in temperature of the exhaust system part is relatively sharp as compared with a case in which the opening of the waste gate valve is small, the timing to start the overheat prevention control can be prevented from being delayed. The exhaust system part can therefore be favorably prevented from overheating, regardless of the opening of the waste gate valve. In addition, when the fuel quantity increase control is used as the overheat prevention control, the present invention allows the timing to start the fuel quantity increase control to be appropriately set according to the opening of the waste gate valve. This allows fuel economy or exhaust emissions to be prevented from being aggravated as a result of wasteful performance of the fuel quantity increase control for prevention of overheating of the exhaust system part.

According to the fifth aspect of the present invention, the timing to terminate the fuel quantity increase control is delayed when the opening of the waste gate valve is large than when the opening of the waste gate valve is small. When the opening of the waste gate valve is small, of the exhaust gas flowing toward the exhaust system part, a ratio of a high-temperature turbine passing gas that reaches the exhaust system part late is high, so that a longer time is required to decrease the temperature of the exhaust system part during the performance of the fuel quantity increase control. The present invention allows the timing to terminate the fuel quantity increase control when the opening of the waste gate valve is relatively small not to be too early, based on such a temperature decrease characteristic. Overheating of the exhaust system part can therefore be favorably prevented regardless of the opening of the waste gate valve. To state the foregoing another way, based on the above temperature decrease characteristic, the present invention allows the timing to terminate the fuel quantity increase control when the opening of the waste gate valve is relatively large not to be too late. Regardless of the opening of the waste gate valve, therefore, fuel economy or exhaust emissions can be prevented from being aggravated as a result of wasteful performance of the fuel quantity increase control for prevention of overheating of the exhaust system part.

According to the sixth aspect of the present invention, the estimated temperature of the exhaust system part calculated by the exhaust system temperature estimating means is varied according to the opening of the waste gate valve. This allows the timing to perform the overheat prevention control to be varied in consideration of a change in the opening of the waste gate valve.

According to the method of the seventh or eighth aspect of the present invention, the timing to start the overheat prevention control can be advanced when the opening of the waste gate valve is large than when the opening of the waste gate valve is small.

According to the method of the ninth or tenth aspect of the present invention, the timing to terminate the overheat prevention control can be advanced when the opening of the waste gate valve is large than when the opening of the waste gate valve is small.

### Brief Description of Drawings

Fig. 1 is a schematic diagram for illustrating a system configuration of an internal combustion engine according to a first embodiment of the present invention;
Fig. 2 is an illustration for illustrating changes in a temperature environment at a downstream side of a turbine variable according to an open or closed state of a WGV;
Fig. 3 is a graph showing two cases of changes in the temperature of an exhaust system part (specifically, a catalyst in this case) when the operating range of the internal combustion engine is shifted to the range on the heavy load side, one when the WGV is in the open state and the other when the WGV is in the closed state;
Fig. 4 is a flowchart of a routine that is executed in the first embodiment of the present invention;
Fig. 5 is a graph showing a relationship between an exhaust gas temperature at point A in Fig. 2 (inlet of the catalyst) and a ratio of WGV passing gas;
Fig. 6 is a graph showing setting of the overheat determining value in a modified example of the first embodiment of the present invention;
Fig. 7 is a graph for illustrating setting of thermal time constants A and B to be used for estimating a transient change in temperature of the exhaust system part in the second embodiment of the present invention.
Fig. 8 is a flowchart of a routine that is executed in the second embodiment of the present invention;
Fig. 9 is a flowchart of a routine that is executed in the third embodiment of the present invention; and
Fig. 10 is a flowchart of a routine that is executed in the fourth embodiment of the present invention.

### Description of Embodiments

### First Embodiment

### [Description of system configuration]

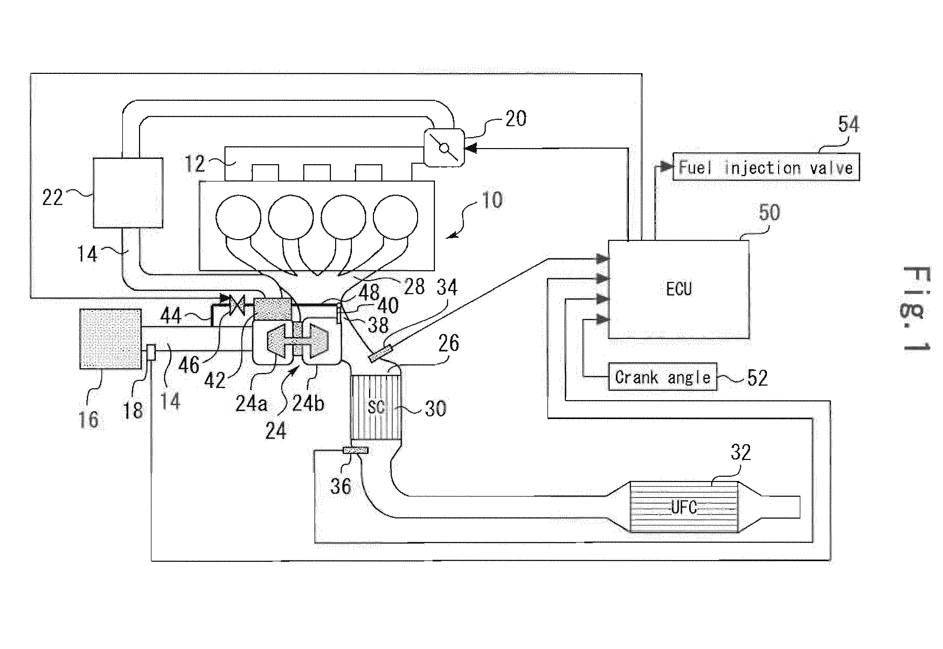

Fig. 1 is a schematic diagram for illustrating a system configuration of an internal combustion engine 10 according to a first embodiment of the present invention. The system of the present embodiment includes a spark ignition type internal combustion engine (gasoline engine) 10. An intake passage 12 and an exhaust passage 14 are in communication with each cylinder of the internal combustion engine 10.

An air cleaner 16 is disposed at a position near an inlet of the intake passage 12. An air flow meter 18 is disposed near a downstream position of the air cleaner 16. The air flow meter 18 outputs a signal according to a flow rate of air drawn into the intake passage 12. A compressor 20a of a turbocharger 20 is disposed downstream of the air flow meter 18. The compressor 20a is integrally connected, via a coupling shaft, to a turbine 20b disposed on the exhaust passage 14.

An intercooler 22 that cools compressed air is disposed downstream of the compressor 20a. An electronic control throttle valve 24 is disposed downstream of the intercooler 22. Each cylinder of the internal combustion engine 10 includes a fuel injection valve 26 for injecting fuel into an intake port. Each cylinder of the internal combustion engine 10 further includes an ignition plug 28 for igniting a mixture gas.

In addition, an exhaust bypass passage 30 is connected to the exhaust passage 14. The exhaust bypass passage 30 branches off from the exhaust passage 14 at an upstream portion of the turbine 20b and merges with the exhaust passage 14 at a downstream portion of the turbine 20b. A waste gate valve (WGV) 32 that opens or closes the exhaust bypass passage 30 is disposed in the middle of the exhaust bypass passage 30. The WGV 32 is here to be adjustable to any opening by a pressure-controlled or electrically-operated actuator (not shown). It is noted that if a pressure-controlled actuator is to be used, the opening of the WGV 32 can, for example, be obtained by the following method. Specifically, pressure acting on the actuator (diaphragm pressure) is estimated based on a drive duty ratio of a solenoid valve (not shown) that adjusts the diaphragm pressure; based on the estimated diaphragm pressure, the WGV opening can be calculated. If a system changes the WGV opening simply between an open state and a closed state, acquisition of the WGV opening requires simply that the open state and the closed state of the WGV 32 be determined.

A catalyst 34 for purifying an exhaust gas is disposed on the exhaust passage 14, which is further downstream of a portion connected to the exhaust bypass passage 30 at the downstream side of the turbine 20b. A crank angle sensor 38 for detecting an engine speed is disposed near a crankshaft 36.

The system shown in Fig. 1 further includes an ECU (electronic control unit) 40. Various types of sensors for detecting an operating condition of the internal combustion engine 10 are connected to an input section of the ECU 40.
The sensors include, but are not limited to, an accelerator pedal position sensor 42 for detecting a depression amount of an accelerator pedal mounted on a vehicle (accelerator pedal position), in addition to the air flow meter 18 and the crank angle sensor 38. Various types of actuators for controlling the operating condition of the internal combustion engine 10 are connected to an output section of the ECU 40. The actuators include, but are not limited to, the throttle valve 24, the fuel injection valve 26, the ignition plug 28, the WGV 32 and the like.

### [Control in First Embodiment]

### (Control for preventing the exhaust system part from overheating as a result of fuel quantity increase control)

The system of the present embodiment having arrangements as described above may perform fuel quantity increase control to increase a fuel injection quantity in order to prevent the catalyst 34 or other exhaust system part from overheating when an operating range of the internal combustion engine 10 is shifted to a range on a heavy load side.

Specifically, an estimated temperature is to be calculated for each of the exhaust system parts including the catalyst 34 and an exhaust pipe that constitutes the exhaust passage 14 positioned downstream of the turbine 20b. More specifically, the estimated temperature of each of the exhaust system parts is calculated as a value that changes with a time lag which varies from one exhaust system part to another, with respect to a steady-state stable temperature calculated based on a relationship (for example, a map) between a load (intake air quantity or intake air pressure) of the internal combustion engine 10 and the engine speed.

When the estimated temperature of the exhaust system part exceeds a predetermined overheat determining value set for each exhaust system part (when any of estimated temperatures of a plurality of exhaust system parts exceeds the overheat determining value for the first time), it is determined that the exhaust system part is in an overheated condition and the fuel quantity increase control is performed.

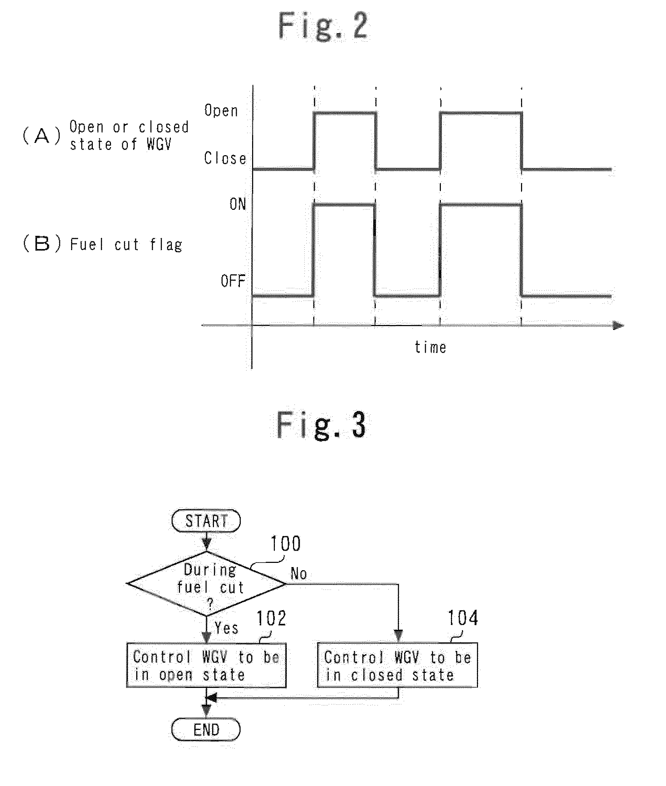

Fig. 2 is an illustration for illustrating changes in a temperature environment at a downstream side of the turbine 20b variable according to the open or closed state of the WGV 32.
As shown in Fig. 2, when the WGV 32 is in the open state, the exhaust gas flows to not only the side of the turbine 20b, but also the side of the exhaust bypass passage 30 via the WGV 32, unlike when the WGV 32 is in the closed state. Specifically, different passages through which the exhaust gas passes (different passage areas) results depending on whether the WGV 32 is in the open state or the closed state. As a result, time during which the exhaust gas reaches the catalyst 34 disposed downstream of the turbine 20b varies depending on whether the WGV 32 is in the open state or the closed state. Specifically, the exhaust gas passing through the WGV 32 and the exhaust bypass passage 30 (WGV passing gas) takes a shorter time to reach the catalyst 34 than the exhaust gas passing through the turbine 20b (turbine passing gas) does.

When the temperature of the exhaust gas discharged from cylinders increases as the operating range of the internal combustion engine 10 is shifted to the range on the heavy load side, the turbine 20b takes thermal energy of the turbine passing gas transiently (in a condition in which there is a difference in temperature between the turbine passing gas and the turbine 20b). This creates a transient difference in heat quantity between the turbine passing gas and the WGV passing gas as each reaches the catalyst 34. Specifically, the WGV passing gas has a temperature, and the heat quantity, transiently higher than the turbine passing gas.

Fig. 3 is a graph showing two cases of changes in the temperature of the exhaust system part (specifically, the catalyst 34 in this case) when the operating range of the internal combustion engine 10 is shifted to the range on the heavy load side, one when the WGV 32 is in the open state and the other when the WGV 32 is in the closed state. A "steady-state value" shown in Fig. 3 refers to the steady-state stable temperature of the catalyst 34 after the operating range of the internal combustion engine 10 has been shifted to the range on the heavy load side.

When the temperature of the exhaust gas discharged from the cylinder increases as the operating range of the internal combustion engine 10 is shifted to the range on the heavy load side, the temperature of the catalyst 34 increases with a time lag as shown in Fig. 3. In addition, the temperature environment at the downstream side of the turbine 20b changes transiently according to the open or closed state of the WGV 32 as described earlier. As a result, as shown in Fig. 3, the temperature of the catalyst 34 increases at a pace faster when the WGV 32 is in the open state than when the WGV 32 is in the closed state.

Additionally, when the exhaust gas flows past the turbine 20b, the heat quantity of the exhaust gas decreases by an amount of work done by the turbine 20b. Accordingly, strictly speaking, the steady-state stable temperature of the catalyst 34 also varies according to the open or closed state of the WGV 32 in proportion to the heat quantity.

### (Characteristic control in the First Embodiment)

The change in temperature of the catalyst 34 involved in the shift of the operating range of the internal combustion engine 10 to the range on the heavy load side exhibits characteristics that vary according to the open or closed state of the WGV 32 as shown in Fig. 3. Therefore, when the fuel quantity increase control is used to prevent the catalyst 34 from overheating under heavy load, failure to consider the above-noted temperature change characteristic of the catalyst 34 varying according to the open or closed state of the WGV 32 may result in a case in which the fuel quantity increase is not made at appropriate timing. As a result, if the timing to increase the fuel quantity is delayed, the catalyst 34 may be overheating.

In the present embodiment, therefore, timing to perform the fuel quantity increase control for preventing the catalyst 34 from overheating is varied according to the open or closed state of the WGV 32. Specifically, when the WGV 32 is in the open state, timing to start the fuel quantity increase control is advanced as compared with timing in a case where the WGV 32 is in the closed state. To achieve that end in the present embodiment, the overheat determining value of the estimated temperature of the catalyst 34 for determining whether the catalyst 34 is in an overheated condition is set to be lower when the WGV 32 is in the open state than when the WGV 32 is in the closed state.

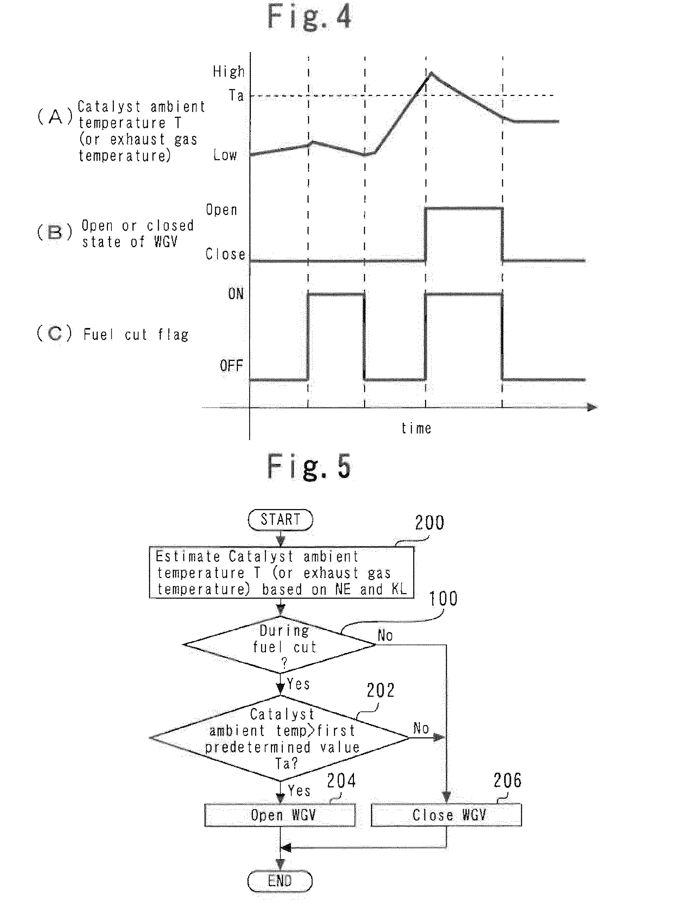

Fig. 4 is a flow chart showing a control routine performed by the ECU 40 in the first embodiment to achieve the above-described function. It is noted that this routine is started when load on the internal combustion engine 10 is shifted into a heavy load range with reference to a predetermined value and repeatedly performed at a predetermined time intervals. The routine will be described for the catalyst 34 as the exhaust system part disposed downstream of the turbine 20b.

In the routine shown in Fig. 4, it is first determined whether the WGV 32 is in the open state or the closed state (step 100). When it is, as a result, determined that the WGV 32 is in the closed state, an overheat determining value B is set as the overheat determining value to be here used (step 102).

It is next determined whether the estimated temperature of the catalyst 34 is higher than the overheat determining value B (step 104). When, as a result, determination in step 104 holds, the fuel quantity increase control for preventing the catalyst 34 from overheating starts (step 106).

When it is determined in step 100 that the WGV 32 is in the open state, an overheat determining value A lower than the overheat determining value B is set as the overheat determining value to be here used (step 108). Next, it is determined whether the estimated temperature of the catalyst 34 is higher than the overheat determining value A (step 110). When, as a result, determination in step 110 holds, the above-described fuel quantity increase control starts (step 106).

According to the routine shown in Fig. 4, the overheat determining value A used when the WGV 32 is in the open state is set to be lower than the overheat determining value B used when the WGV 32 is in the open state. Thus, in a case where the WGV 32 is in the open state, the fuel quantity increase control is started under a condition in which the estimated temperature of the catalyst 34 is lower as compared with a case in which the WGV 32 is in the closed state.

Specifically, processing of the above routine allows the timing to start the fuel quantity increase control to be advanced when the WGV 32 is in the open state than when the WGV 32 is in the closed state. This allows the timing to start the fuel quantity increase control not to be delayed when the WGV 32 is in the open state during which a transient change in temperature of the catalyst 34 (exhaust system part) is relatively sharp as shown in above Fig. 3. The exhaust system part can therefore be favorably prevented from overheating, regardless of whether the WGV 32 is in the open or closed state.

To state the foregoing another way, the processing of the above routine delays more the timing to start the fuel quantity increase control when the WGV 32 is in the closed state than when the WGV 32 is in the open state. This allows the timing to start the fuel quantity increase control not to be too early when the WGV 32 is in the closed state during which a transient change in temperature of the catalyst 34 (exhaust system part) is relatively mild as shown in above Fig. 3. Therefore, regardless of whether the WGV 32 is in the open or closed state, fuel economy or exhaust emissions can be prevented from being aggravated as a result of wasteful performance of the fuel quantity increase control for prevention of overheating of the exhaust system part.

In the first embodiment, which has been described above, the timing to start the fuel quantity increase control for overheat prevention is varied according to the WGV opening (according to whether the WGV 32 is in the open or closed state). However, specific embodiments in which the overheat prevention control timing changing means in the present invention varies the timing to perform the overheat prevention control according to the WGV opening are not limited to the above-described embodiment. Specifically, for example, when the opening of the WGV 32 is large, timing to start the overheat prevention control may be advanced as compared with timing in a case where the opening of the WGV 32 is small (which corresponds to the closed state (zero opening) in the first embodiment). Alternatively, for example, the following arrangement may be possible.

Fig. 5 is a graph showing a relationship between an exhaust gas temperature at point A in Fig. 2 (inlet of the catalyst 34) and a ratio of WGV passing gas.
At timing immediately after the operating range of the internal combustion engine 10 is shifted to the range on the heavy load side, the exhaust gas temperature at the point A in Fig. 2 (inlet of the catalyst 34) is higher when the WGV 32 is open than when the WGV 32 is otherwise because of presence of the WGV passing gas whose temperature is high, as described earlier with reference to Fig. 2. The exhaust gas temperature at the point A is, more specifically, transiently higher with greater ratios of WGV passing gas (specifically, with greater WGV 32 opening angles) as shown in Fig. 5.

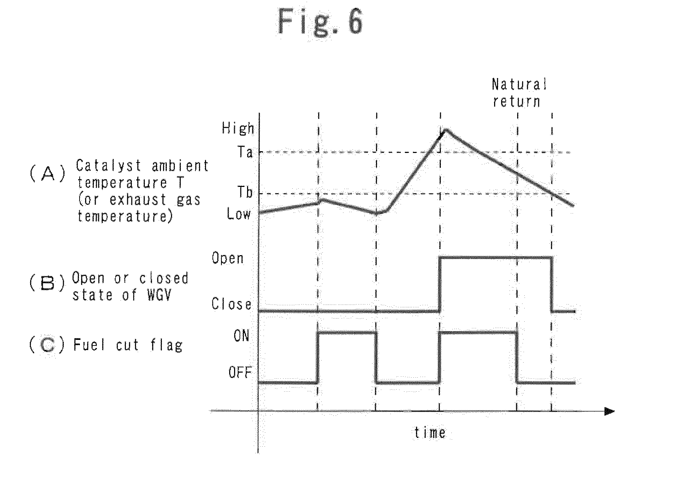

Fig. 6 is a graph showing setting of the overheat determining value in a modified example of the first embodiment of the present invention.
As shown in Fig. 6, setting may be made such that as WGV opening angles are greater, so the overheat determining value is lower. Making setting in this manner allows the fuel quantity increase control for overheat prevention to be started at earlier timing as WGV opening angles are greater. The exhaust system part can therefore be favorably prevented from overheating, regardless of changes in the WGV opening.

It is noted that in the first embodiment, which has been described heretofore, the catalyst 34 corresponds to the "exhaust system part" in the first aspect of the present invention, the estimated temperature of the catalyst 34 (exhaust system part) corresponds to the "estimated value based on the parameter indicative of an operating state of the internal combustion engine" in the first aspect of the present invention, and the timing to start the fuel quantity increase control corresponds to the "control amount relating to performance of the overheat prevention control" in the first aspect of the present invention. Similarly, calculation of the WGV opening by the ECU 40 based on the diaphragm pressure estimated based on the drive duty ratio of the above-described solenoid valve not shown achieves the "WGV opening acquiring means" in the first aspect of the present invention; performance of the process of step 104 or 110 by the ECU 40 achieves the "overheat determining means" in the first aspect of the present invention; performance of the process of step 106 by the ECU 40 when the process of step 104 or 110 holds, achieves the "overheat prevention control performing means" in the first aspect of the present invention; and performance by the ECU 40 of the process of either step 102 or 108, whichever is selected according to a result of determination of step 100, achieves the "overheat prevention control changing means" in the first aspect of the present invention.
Similarly, in the first embodiment, which has been described above, performance by the ECU 40 of the process of either step 102 or 108, whichever is selected according to a result of determination of step 100, achieves the "overheat prevention control timing changing means" in the second aspect of the present invention, the "start timing changing means" in the fourth aspect of the present invention, and the "determining value changing means" in the seventh aspect of the present invention, respectively.
Additionally, in the first embodiment, which has been described above, calculation by the ECU 40 of the estimated temperature of the exhaust system part based on the relationship between the load on and the engine speed of the internal combustion engine 10 (e.g., map) achieves the "exhaust system temperature estimating means" in the seventh aspect of the present invention.

### Second Embodiment

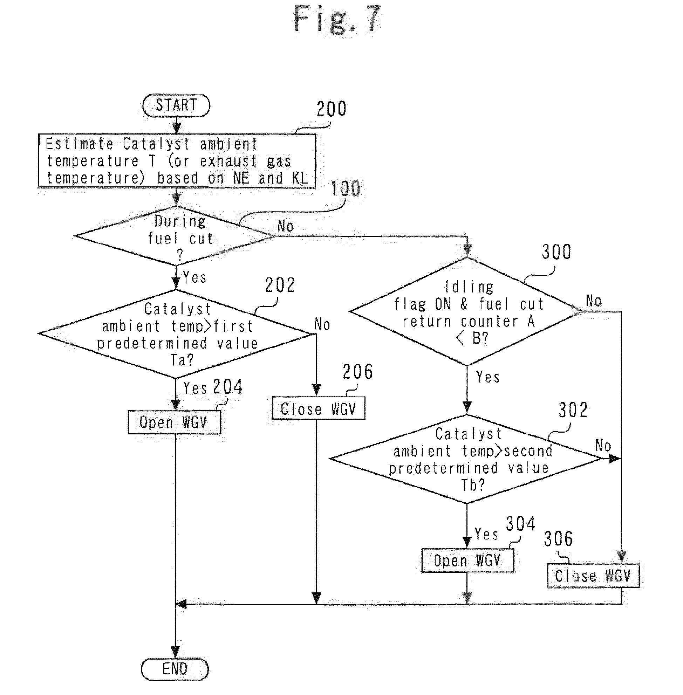

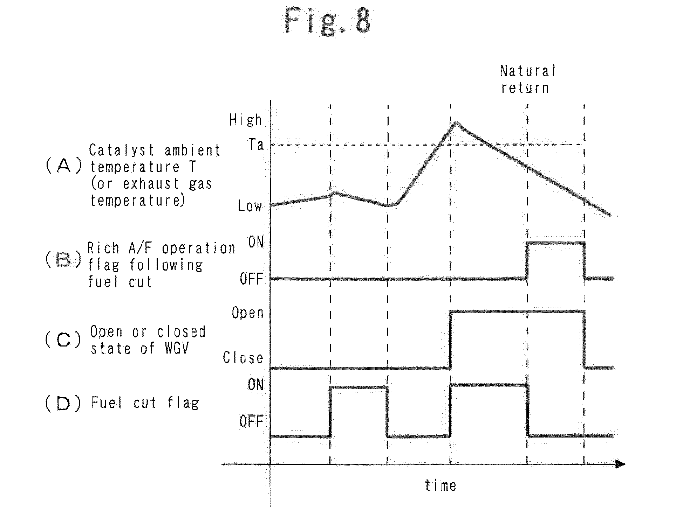

A second embodiment of the present invention will be described below with reference to Figs. 7 and 8.
A system of the present embodiment can be achieved by using the hardware configuration shown in Fig. 1 to let the ECU 40 perform a routine shown in Fig. 8 to be described later instead of the routine shown in Fig. 4.

Fig. 7 is a graph for illustrating setting of thermal time constants A and B to be used for estimating a transient change in temperature of the exhaust system part in the second embodiment of the present invention.
In the present embodiment, too, similarly to the first embodiment described above, timing to start the fuel quantity increase control for prevention of overheating of the exhaust system part is advanced when the WGV 32 is in the open state than when the WGV 32 is in the closed state. The system of the present embodiment differs from the system of the first embodiment in a specific method for achieving the foregoing. Specifically, in the present embodiment, the thermal time constant to be used for estimating the transient change in temperature of the exhaust system part, such as the catalyst 34, is varied according to the open or closed state of the WGV 32.

Specifically, in the present embodiment, referring to Fig. 7, the thermal time constant A to be used when the WGV 32 is in the open state is set to be smaller than the thermal time constant B to be used when the WGV 32 is in the closed state.

Fig. 8 is a flow chart showing a control routine performed by the ECU 40 in the second embodiment to achieve the above-described function. It is noted that in Fig. 8, the same steps as those shown in Fig. 4 in the first embodiment are identified by the same reference numerals and descriptions therefor will be omitted or simplified.

In the routine shown in Fig. 8, when the WGV 32 is determined to be in the closed state in step 100, the thermal time constant B is set for the thermal time constant to be used in this case (step 200). When, on the other hand, it is determined in step 100 that the WGV 32 is in the open state, the thermal time constant A which is smaller than the thermal time constant B is set for the thermal time constant to be used in this case (step 202).

Next, an estimated temperature (steady-state stable temperature) X of the catalyst 34, which is steadily stable under the current engine speed and the load (e.g., intake air quantity) is calculated (step 204). More specifically, the steady-state stable temperature X is calculated according to a map (not shown) that establishes the steady-state stable temperature X based on a relationship between the engine speed and the load. It is noted that when a plurality of exhaust system parts are involved, the steady-state stable temperature X is to be calculated for each of the exhaust system parts.

Next, a current value Y of the estimated temperature of the catalyst 34 is calculated (step 206). More specifically, the current value Y is calculated such that a difference between the steady-state stable temperature X calculated in step 204 and the preceding value Y is multiplied by a thermal time constant coefficient Z, and a value thus obtained is added to a preceding value Y of the estimated temperature of the catalyst 34. It is to be noted that the thermal time constant coeficient Z is set such that, corresponding to the setting of the thermal time constants A and B, a value of the thermal time constant coefficient Z when the WGV 32 is in the open state is greater than a value of the thermal time constant coefficient Z when the WGV 32 is in the closed state.

Next, the preceding value Y is updated by the current value Y of the estimated temperature of the catalyst 34 calculated in step 206 (step 208). Then, it is determined whether the current value Y of the estimated temperature of the catalyst 34 calculated in step 206 is greater than a predetermined overheat determining value (step 210). It is noted that the overheat determining value in step 210 differs from that in the routine shown in Fig. 4 and is a fixed value regardless of whether the WGV 32 is in the open or closed state.

When determination in step 210 holds, the fuel quantity increase control for prevention of overheating of the catalyst 34 is started (step 106).

According to the routine shown in Fig. 8 described above, under a transient condition in which a difference is noted between the steady-state stable temperature X and the preceding value Y, the current value Y is calculated to be a value with a greater change from the preceding value Y when the WGV 32 is in the open state than when the WGV 32 is in the closed state. This allows an estimated temperature Y of the catalyst 34 to be calculated as a value that is compatible with a transient change characteristic of the estimated temperature Y of the catalyst 34 (see Fig. 3) variable according to the open or closed state of the WGV 32.

The fuel quantity increase control for prevention of overheating of the catalyst 34 is then performed based on a comparison made between the estimated temperature Y of the catalyst 34 obtained as described above and the predetermined overheat determining value. This allows the timing to start the fuel quantity increase control for prevention of overheating of the catalyst 34 to be advanced when the WGV 32 is in the open state than when the WGV 32 is in the closed state. The same effect as that of the first embodiment described earlier can thereby be achieved.

In the second embodiment, which has been described above, the thermal time constant to be used for estimating the transient change in temperature of the exhaust system part is varied according to whether the WGV 32 is in the open or closed state. This is, however, not the only possible arrangement for the present invention. For example, the thermal time constant may be set to be smaller when the opening of the WGV 32 is large than when the opening of the WGV 32 is small (that corresponds in the second embodiment to a closed state (zero opening state)). Alternatively, for example, the thermal time constant may be set to be smaller as WGV opening angles are greater.

Additionally, in the second embodiment, which has been described above, the steady-state stable temperature X is calculated according to a map (not shown) that establishes the steady-state stable temperature X based on a relationship between the engine speed and the load. As described earlier, when the exhaust gas flows past the turbine 20b, the heat quantity of the exhaust gas decreases by the amount of work done by the turbine 20b. Accordingly, strictly speaking, the steady-state stable temperature X varies according to the open or closed state of the WGV 32. To estimate the steady-state stable temperature X even more accurately, therefore, the abovementioned map for calculating the steady-state stable temperature X may be prepared in different versions, one for a case when the WGV 32 is in the open state and the other for a case when the WGV 32 is in the closed state. Further, such maps may be prepared in any number of versions according to the WGV opening angle.

Processing of the routine shown in Fig. 8 may be said to vary the estimated temperature of the catalyst 34 (exhaust system part) according to the open or closed state of the WGV 32. In addition, the processing of the above routine may also be said to correct the estimated temperature of the exhaust system part when the WGV 32 is in the open state with reference to the estimated temperature of the exhaust system part when the WGV 32 is in the closed state. An arrangement can therefore be made, for example, so that the estimated temperature of the exhaust system part when the WGV 32 is in the open state is obtained by correcting the same with reference to the estimated temperature of the exhaust system part when the WGV 32 is in the closed state.

It is noted that in the second embodiment, which has been described above, the thermal time constants A and B correspond to the "reference value relating to performance of the overheat prevention control" in the first aspect of the present invention.
Additionally, in the second embodiment, which has been described above, performance of the processes of steps 204 and 206 by the ECU 40 achieves the "exhaust system temperature estimating means" in the eighth aspect of the present invention, and performance, by the ECU 40, of the process of either step 200 or 202, whichever is selected according to a result of determination of step 100, achieves the "thermal time constant changing means" in the eighth aspect of the present invention.

### Third Embodiment

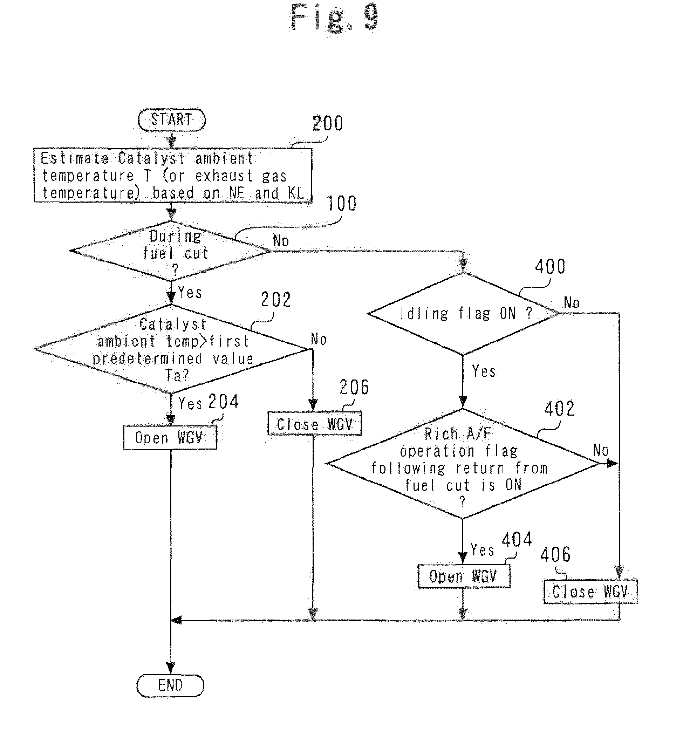

A third embodiment of the present invention will be described below with reference to Fig. 9.
A system of the present embodiment can be achieved by using the hardware configuration shown in Fig. 1 to let the ECU 40 perform a routine shown in Fig. 9 to be described later instead of the routine shown in Fig. 4.

The systems of the first and second embodiments described above vary the timing to start the fuel quantity increase control for prevention of overheating according to the open or closed state of the WGV 32. In contrast, the system of the present embodiment is **characterized in that** timing to terminate the fuel quantity increase control according to opening of the WGV 32 (in this case, whether the WGV 32 is in the open state or the closed state).

As described earlier with reference to Fig. 2, the WGV passing gas reaches the exhaust system part, such as the catalyst 34, disposed downstream of the turbine 20b earlier than the turbine passing gas. When the WGV 32 is in the open state, therefore, during performance of the fuel quantity increase control, a low-temperature exhaust gas whose temperature has been reduced by the fuel quantity increase control is to reach the exhaust system part earlier as compared with a case in which the WGV 32 is in the closed state.

Additionally, the turbine passing gas during performance of the fuel quantity increase control receives heat from the turbine 20b and the like having a large heat mass, in addition to being slower to reach the exhaust system part than the WGV passing gas. These factors result in requiring a longer time to decrease in temperature of the exhaust system part when the turbine passing gas flows through the exhaust system part than when the WGV passing gas flows therethrough.

In the present embodiment, therefore, when the WGV 32 is in the open state, the timing to terminate the fuel quantity increase control is advanced than when the WGV 32 is in the closed state. To achieve that end in the present embodiment, when the WGV 32 is in the open state, a determination value of the estimated temperature of the exhaust system part for determining the timing to terminate the fuel quantity increase control (hereinafter referred to as a "termination timing determining value") is set to be greater than when the WGV 32 is in the closed state.

Fig. 9 is a flow chart showing a control routine performed by the ECU 40 in the third embodiment to achieve the above-described function. It is noted that in Fig. 9, the same steps as those shown in Fig. 4 in the first embodiment are identified by the same reference numerals and descriptions therefor will be omitted or simplified. This routine is started during performance of the fuel quantity increase control for prevention of overheating of the catalyst 34.

In the routine shown in Fig. 9, when it is determined that the WGV 32 is the closed state in step 100, a termination timing determining value B is set for the termination timing determining value to be used in this case (step 300). Next, it is determined whether the estimated temperature of the catalyst 34 is lower than the termination timing determining value B (step 302). When, as a result, determination in step 302 holds, the fuel quantity increase control for prevention of overheating of the catalyst 34 is terminated (step 304).

When, on the other hand, it is determined that the WGV 32 is in the open state in step 100, a termination timing determining value A greater than the termination timing determining value B is set for the termination timing determining value to be used in this case (step 306). Next, it is determined whether the estimated temperature of the catalyst 34 is lower than the termination timing determining value A (step 308). When, as a result, determination in step 308 holds, the fuel quantity increase control is terminated (step 304).

According to the routine shown in Fig. 9 described above, the termination timing determining value A used when the WGV 32 is in the open state is set to be greater than the termination timing determining value B used when the WGV 32 is in the closed state. Thus, in a case where the WGV 32 is in the open state, the fuel quantity increase control is terminated under a condition in which the estimated temperature of the catalyst 34 is higher as compared with a case in which the WGV 32 is in the closed state.

Specifically, processing of the above routine allows the timing to terminate the fuel quantity increase control to be advanced when the WGV 32 is in the open state than when the WGV 32 is in the closed state. When the WGV 32 is in the open state, because of presence of a WGV passing gas that is low-temperature and reaches the catalyst 34 downstream of the turbine 20b earlier, the temperature of the catalyst 34 can be decreased even earlier during performance of the fuel quantity increase control. The processing of the above routine allows the timing to terminate the fuel quantity increase control when the WGV 32 is in the open state not to be too late, based on a temperature decrease characteristic of the catalyst 34 during performance of the fuel quantity increase control, which is variable according to the open or closed state of the WGV 32. Therefore, regardless of whether the WGV 32 is in the open or closed state, fuel economy or exhaust emissions can be prevented from being aggravated as a result of wasteful performance of the fuel quantity increase control for prevention of overheating of the exhaust system part.

To state the foregoing another way, the processing of the above routine delays more the timing to terminate the fuel quantity increase control when the WGV 32 is in the closed state than when the WGV 32 is in the open state. When the WGV 32 is in the closed state, only a turbine passing gas that is high-temperature and reaches the catalyst 34 late flows through the catalyst 34, so that, as described earlier, a longer time is required to decrease the temperature of the catalyst 34 during the performance of the fuel quantity increase control. The processing of the above routine allows the timing to terminate the fuel quantity increase control when the WGV 32 is in the closed state not to be too early, based on such a temperature decrease characteristic. Overheating of the exhaust system part can therefore be favorably prevented regardless of whether the WGV 32 is in the open or closed state.

In the third embodiment, which has been described above, the timing to terminate the fuel quantity increase control for overheat prevention is varied according to the WGV opening (according to whether the WGV 32 is in the open or closed state). However, specific embodiments in which the overheat prevention control timing changing means in the present invention varies the timing to perform the overheat prevention control according to the WGV opening are not limited to the above-described embodiment. Specifically, for example, when the opening of the WGV 32 is large, timing to terminate the overheat prevention control may be advanced as compared with timing in a case where the opening of the WGV 32 is small (which corresponds to the closed state (zero opening state) in the third embodiment). Alternatively, for example, the following arrangement may be possible.

Specifically, during performance of the overheat prevention control (e.g., the fuel quantity increase control), presence of the WGV passing gas whose temperature is low allows the temperature of the exhaust system part disposed downstream of the turbine 20b to be decreased even earlier when the WGV 32 is open than when the WGV 32 is otherwise as described earlier. Such a trend is more conspicuous as ratios of the WGV passing gas are higher (specifically, as opening angles of the WGV 32 is greater). Thus, the termination timing determining value may be set to be greater as WGV opening angles are greater. Such setting allows the fuel quantity increase control for overheat prevention to be terminated at earlier timing as WGV opening angles are greater. The exhaust system part can thus be favorably prevented from overheating, while fuel economy or exhaust emissions can be prevented from being aggravated as a result of wasteful increase of the fuel quantity for prevention of overheating of the exhaust system part, regardless of changes in the WGV opening.

It is noted that in the third embodiment, which has been described above, the timing to terminate the fuel quantity increase control corresponds to the "control amount relating to performance of the overheat prevention control" in the first aspect of the present invention.
Similarly, in the third embodiment, which has been described above, performance by the ECU 40, of the process of either step 300 or 306, whichever is selected according to a result of determination of step 100 achieves the "termination timing changing means" in the fifth aspect of the present invention and the "determining value changing means" in the ninth aspect of the present invention, respectively.
Additionally, in the third embodiment, which has been described above, calculation by the ECU 40 of the estimated temperature of the exhaust system part using the same method as that in the first embodiment described earlier achieves the "exhaust system temperature estimating means" in the sixth and ninth aspects of the present invention and performance of a series of processes of steps 100 to 206 by the ECU 40 achieves the "estimated temperature changing means" in the sixth aspect of the present invention.
Additionally, in the third embodiment, which has been described above, performance of a process of steps 302 or 306 by the ECU 40 achieves the "termination timing setting means" in the ninth aspect of the present invention.

### Fourth Embodiment

A fourth embodiment of the present invention will be described below with reference to Fig. 10.
A system of the present embodiment can be achieved by using the hardware configuration shown in Fig. 1 to let the ECU 40 perform a routine shown in Fig. 10 to be described later instead of the routine shown in Fig. 4.

In the present embodiment, too, similarly to the third embodiment described above, timing to terminate the fuel quantity increase control for prevention of overheating of the exhaust system part is advanced when the WGV 32 is in the open state than when the WGV 32 is in the closed state. The system of the present embodiment differs from the system of the third embodiment in a specific method for achieving the foregoing. Specifically, in the present embodiment, the thermal time constant to be used for estimating the transient change in temperature of the exhaust system part, such as the catalyst 34, is varied according to the open or closed state of the WGV 32.

Specifically, in the present embodiment, a thermal time constant C to be used when the WGV 32 is in the open state is set to be smaller than a thermal time constant D to be used when the WGV 32 is in the closed state.

Fig. 10 is a flow chart showing a control routine performed by the ECU 40 in the fourth embodiment to achieve the above-described function. It is noted that in Fig. 10, the same steps as those shown in Fig. 9 in the third embodiment are identified by the same reference numerals and descriptions therefor will be omitted or simplified.

In the routine shown in Fig. 10, when it is determined in step 100 that the WGV 32 is in the closed state, the thermal time constant D is set for the thermal time constant to be used in this case (step 400). When, on the other hand, it is determined in step 100 that the WGV 32 is in the open state, the thermal time constant C which is smaller than the thermal time constant D is set for the thermal time constant to be used in this case (step 402).

Next, through the same process as that in step 204, an estimated temperature (steady-state stable temperature) X of the catalyst 34 that is steadily stable under the current engine speed and the load (e.g., intake air quantity) is calculated (step 404).

Next, through the same process as that in step 206, a current value Y of the estimated temperature of the catalyst 34 is calculated (step 406). It is to be noted that, in step 406, a thermal time constant coefficient Z' is set such that, corresponding to the setting of the thermal time constants C and D, a value of the thermal time constant coefficient Z' when the WGV 32 is in the open state is greater than a value of the thermal time constant coefficient Z' when the WGV 32 is in the closed state.

Next, a preceding value Y is updated by the current value Y of the estimated temperature of the catalyst 34 calculated in step 406 (step 408). Then, it is determined whether the current value Y of the estimated temperature of the catalyst 34 calculated in step 406 is smaller than a predetermined termination timing determining value (step 410). It is noted that the termination timing determining value in step 410 differs from that in the routine shown in Fig. 9 and is a fixed value regardless of whether the WGV 32 is in the open or closed state.

When determination in step 410 holds, the fuel quantity increase control for prevention of overheating of the catalyst 34 is terminated (step 304).

In the routine shown in Fig. 10 described above, under a transient condition in which a difference is noted between the steady-state stable temperature X and the preceding value Y, the current value Y is calculated to be a value with a greater change from the preceding value Y when the WGV 32 is in the open state than when the WGV 32 is in the closed state. This allows an estimated temperature Y of the catalyst 34 to be calculated as a value that is compatible with a transient change characteristic (the temperature decrease characteristic described earlier in the third embodiment) of the estimated temperature Y of the catalyst 34 variable according to the open or closed state of the WGV 32.

The fuel quantity increase control for overheat prevention is then terminated based on a comparison made between the estimated temperature Y of the catalyst 34 obtained as described above and the predetermined termination timing determining value. This allows the timing to terminate the fuel quantity increase control for prevention of overheating of the catalyst 34 to be advanced when the WGV 32 is in the open state than when the WGV 32 is in the closed state. The same effect as that of the third embodiment described earlier can thereby be achieved.

In the fourth embodiment, which has been described above, the thermal time constant to be used for estimating the transient change in temperature of the exhaust system part is varied according to whether the WGV 32 is in the open or closed state. This is, however, not the only possible arrangement for the present invention. Specifically, for example, the thermal time constant may be set to be smaller when the opening of the WGV 32 is large than when the opening of the WGV 32 is small (that corresponds in the fourth embodiment to a closed state (zero opening state)). Alternatively, for example, the thermal time constant may be set to be smaller as WGV opening angles are greater.

It is noted that in the fourth embodiment, which has been described above, the thermal time constants C and D correspond to the "reference value relating to performance of the overheat prevention control" in the first aspect of the present invention.
Additionally, in the second embodiment, which has been described above, performance of the processes of steps 404 and 406 by the ECU 40 achieves the "exhaust system temperature estimating means" in the tenth aspect of the present invention, and performance by the ECU 40, of the process of either step 400 or 402, whichever is selected according to a result of determination of step 100, achieves the "thermal time constant changing means" in the tenth aspect of the present invention.

The first through fourth embodiments described heretofore have been described for the fuel quantity increase control for increasing the fuel injection quantity as an exemplary case for the overheat prevention control for the exhaust system part (catalyst 34). However, the overheat prevention control in the present invention is not limited to the fuel quantity increase control. Specifically, if, for example, an exhaust pipe that constitutes the exhaust passage disposed downstream of the turbine is considered as the exhaust system part disposed downstream of the turbine, the overheat prevention control performing means may be, for example, means for cooling the exhaust pipe using coolant for cooling the internal combustion engine.

In addition, in the first through fourth embodiments , which have been described above, it is determined whether the exhaust system part is in an overheated condition based on a comparison made between the estimated temperature of the exhaust system part and the overheat determining value. However, the overheat determining means in the present invention is not necessarily limited to one that determines based on a comparison of the estimated temperature of the exhaust system part obtained through calculation against the overheat determining value. Specifically, whether the exhaust system part is in an overheated condition (or a condition of concern about overheating) may be determined based on, for example, a direct comparison of a parameter indicative of an operating condition of the internal combustion engine (e.g., load (such as the intake air quantity) or an accelerator pedal position) against a predetermined overheat determining value.

### Description of symbols

- 10: internal combustion engine
- 12: intake passage
- 14: exhaust passage
- 18: air flow meter
- 20: turbocharger
- 20a: compressor
- 20b: turbine
- 24: throttle valve
- 26: fuel injection valve
- 28: ignition plug
- 30: exhaust bypass passage
- 32: waste gate valve (WGV)
- 34: catalyst
- 38: crank angle sensor
- 40: electronic control unit (ECU)
- 42: accelerator opening sensor

## Claims

1. A control apparatus for an internal combustion engine, comprising:
a turbocharger including a turbine disposed in an exhaust passage, the turbine being operative by exhaust energy;
an exhaust bypass passage branching off from the exhaust passage at an upstream portion side of the turbine and merging with the exhaust passage at a downstream portion side of the turbine;
a waste gate valve for opening or closing the exhaust bypass passage;
WGV opening acquiring means for acquiring opening of the waste gate valve;
an exhaust system part disposed further downstream of the downstream portion;
overheat determining means for determining whether the exhaust system part is in an overheated condition based on a parameter indicative of an operating state of the internal combustion engine or an estimated value based on the parameter;
overheat prevention control performing means for performing overheat prevention control that prevents the exhaust system part from overheating, when a determination made by the overheat determining means holds; and
overheat prevention control changing means for changing a control amount or a reference value which is relating to performance of the overheat prevention control, according to the opening of the waste gate valve.

2. The control apparatus for an internal combustion engine according to claim 1,
wherein the overheat prevention control changing means is overheat prevention control timing changing means for changing timing to perform the overheat prevention control according to the opening of the waste gate valve.

3. The control apparatus for an internal combustion engine according to claim 1 or 2,
wherein the overheat prevention control is fuel quantity increase control for increasing an amount of fuel injected into the internal combustion engine.

4. The control apparatus for an internal combustion engine according to claim 2 or 3,
wherein the overheat prevention control timing changing means includes start timing changing means for advancing timing to start the overheat prevention control when the opening of the waste gate valve is large relative to timing in a case where the opening of the waste gate valve is small.

5. The control apparatus for an internal combustion engine according to any one of claims 2 to 4,
wherein the overheat prevention control is fuel quantity increase control for increasing an amount of fuel injected into the internal combustion engine, and
wherein the overheat prevention control timing changing means includes termination timing changing means for advancing timing to terminate the fuel quantity increase control when the opening of the waste gate valve is large relative to timing in a case where the opening of the waste gate valve is small.

6. The control apparatus for an internal combustion engine according to any one of claims 2 to 5,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the overheat prevention control timing changing means includes estimated temperature changing means for changing, according to the opening of the waste gate valve, the estimated temperature of the exhaust system part calculated by the exhaust system temperature estimating means.

7. The control apparatus for an internal combustion engine according to claim 4,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the start timing changing means is determining value changing means for reducing the overheat determining value when the opening of the waste gate valve is large as compared with the overheat determining value when the opening of the waste gate valve is small.

8. The control apparatus for an internal combustion engine according to claim 4,
wherein the overheat determining means includes exhaust system temperature estimating means for calculating an estimated temperature of the exhaust system part,
wherein the overheat determining means determines that the exhaust system part is in an overheated condition when the estimated temperature of the exhaust system part is higher than an overheat determining value, and
wherein the start timing changing means includes thermal time constant changing means for making small a thermal time constant used for calculating the estimated temperature of the exhaust system part in the exhaust system temperature estimating means when the opening of the waste gate valve is large as compared with the thermal time constant when the opening of the waste gate valve is small.

9. The control apparatus for an internal combustion engine according to claim 5, further comprising:
exhaust system temperature estimating means for calculating an estimated temperature of the exhaust system part,
wherein the overheat prevention control performing means includes termination timing setting means for terminating the fuel quantity increase control, when the estimated temperature of the exhaust system part is lower than a termination timing determining value during performance of the fuel quantity increase control, and
wherein the termination timing changing means is determining value changing means for increasing the termination timing determining value when the opening of the waste gate valve is large as compared with the termination timing determining value when the opening of the waste gate valve is small.

10. The control apparatus for an internal combustion engine according to claim 5, further comprising:
exhaust system temperature estimating means for calculating an estimated temperature of the exhaust system part,
wherein the overheat prevention control performing means includes termination timing setting means for terminating the fuel quantity increase control, when the estimated temperature of the exhaust system part is lower than a termination timing determining value during performance of the fuel quantity increase control, and
wherein the termination timing changing means includes thermal time constant changing means for making small a thermal time constant used for calculating the estimated temperature of the exhaust system part in the exhaust system temperature estimating means when the opening of the waste gate valve is large as compared with the thermal time constant when the opening of the waste gate valve is small.
